Europäisches Patentamt

European Patent Office

Office européen des brevets

(11) Publication number: **0 229 176**
**B1**

(12) **EUROPEAN PATENT SPECIFICATION**

(45) Date of publication of patent specification: **17.10.90**

(51) Int. Cl.⁵: **A 01 N 25/22, B 27 K 3/50**

(21) Application number: **86904905.6**

(22) Date of filing: **16.07.86**

(86) International application number:
**PCT/HU86/00043**

(87) International publication number:
**WO 87/00399 29.01.87 Gazette 87/03**

(54) **WOOD TREATMENT COMPOSITION.**

(30) Priority: **16.07.85 HU 271985**

(43) Date of publication of application:
**22.07.87 Bulletin 87/30**

(45) Publication of the grant of the patent:
**17.10.90 Bulletin 90/42**

(84) Designated Contracting States:
**AT CH DE FR GB IT LI**

(56) References cited:
**EP-A-0 005 229      GB-A-1 294 690**
**DD-A- 66 017         GB-A-1 342 313**
**DE-A-2 105 174       GB-A-1 354 298**
**DE-A-2 440 139       US-A-3 660 071**
**DE-A-2 710 530       US-A-4 105 793**
**DE-A-3 304 457       US-A-4 329 360**
**FR-A-2 502 054**

**Comparative tests of file 869049064**

**The file contains technical information**
**submitted after the application was filed and**
**not included in this specification**

(73) Proprietor: **INNOFINANCE Altalános Innovácios**
**Pénzintézet**
**Szabadság tér 5-6**
**H-1054 Budapest V (HU)**

(72) Inventor: **ODOR, Zoltán**
**Bimbó ut 108**
**H-1022 Budapest (HU)**
Inventor: **VAJNA, László**
**Pusztaszeri ut 27/c**
**H-1025 Budapest (HU)**
Inventor: **HAJOS, Ferencné**
**Szent István park 6**
**H-1137 Budapest (HU)**

(74) Representative: **Dipl.-Ing. Schwabe, Dr. Dr.**
**Sandmair, Dr. Marx**
**Stuntzstrasse 16**
**D-8000 München 80 (DE)**

Courier Press, Leamington Spa, England.

**Description**

Technical Field

The present invention relates to a process for preparing a substance for the treatment and prevention of plant diseases caused by plant-parasitic fungi living on the bark and woody tissues of arborescent vegetation and to compositions containing the substance.

Background Art

On arborescent vegetation, mainly ornamental and fruit trees of the moderate zone certain fungal infections destructing the bark, phloem and cambiums of trees are widely spread; these pathogens often penetrate into the xyleme. These infections may cause the partial or total destruction. These infections can cause great economical damages. No sufficient chemical protection has been applied so far. The available treatment materials provide a limited or preventive protection only. The treatment provides only a provisional control of the pathogens and the renewal of injury may be expected.

Likely, parasitic fungi also result in substantial destruction in cordon cultivation of vineyards.

Different effects may cause injuries on the bark, like frost damages, bark etoliations caused by the sun, fractions caused by snow, ice, cultivating tools, vibrators, etc., open wounds, bites of animals, damages by insects living in the plant tissues or open wounds caused by pruning. Malign surface injuries caused by fungi should also be considered. These "open doors" provide an easy way for insects and parasitic fungi to penetrate into the plant and thus causing serious infections.

In the intensive growth period, the natural immunosystem of plants is readily activated by the biochemical and histological changes on the wound area and the infection is suppressed. However, in the resting period no or very small defence reaction takes place. A part of fungi appearing on the wound surface and the spores can cause infection even at 0°C.

It is also known that a large number of fungicides of different types are available. These, however, exert their effect only when taken up through the leaves or roots or provide a surface protection only.

For example, the systemic fungicide, Benomyl had been tested against different pathogenic fungi, mainly against Cytospora leucostoma causing the Cytospora carcinoma of peach. A control was possible only if performing the treatment before infection: the infection already developed could not be reversed; the plant could not be cured. The reason of the aforesaid effect is that only a surface protection could be provided and the composition did not penetrate through the bark and phloem [Plant Disease Reporter 60/1976/477—479]. Radioactive studies on American alm (Ulmus americana) showed that both the penetration through the sprouts and the translocation is of low level (Chemical Central Res. Ins. Ottawa, Canada, Information Report CC—X—47, 1972).

The present invention aims to provide a composition which is applicable to control parasitic fungi living in the bark and woody tissues of arborescent vegetation and meets the following requirements:

no phytoxicity,

provides a broad and prolonged fungicidal effect,

forms a durable protecting layer which does not get split and washed down by the sun and rain, resp.,

besides the preventive effect possesses a curative effect as well, i.e. is able to penetrate into the woody tissue through the bark and phloem.

Disclosure of the Invention

It has been found that a substance meeting the above requirements may be prepared by interacting one or more fungicidal compound(s) and alkyl methacrylate in the presence of cross-linking inhibiting compound(s) by energy transmission and mixing the active material obtained in the presence or absence of organic solvent with a resin and/or wax.

As fungicidal active compounds both the systemic and non-systemic fungicides may be used: the penetration is provided by the formation of the material obtained by interaction with the alkyl methacrylate and inhibitor.

Examples of fungicides are the benzimidazol and triazine derivatives, copper- and/or sulfur-containing fungicides, cyanoacetic acid derivatives, the mixtures of the above fungicides. Preferred fungicides are the following commercially available compounds: Methoxycarbamoyl benzimidazole, Benomyl, Captafol, Zineb, Thiophanate-methyl, Procymidon, 2-n-octyl-n-isothiazolin-3-on, Cursate, copper oxychloride, Fenarimol, Captan, Metidathion, 8-oxyquinoline sulfate, Triphorin, Iprodion, Vinchlozolin and the mixture(s) thereof.

Resins are, e.g. the synthetic resins such as the alkyd, epoxy, styrene, silicon and/or polyurethane resins and tar. Examples of wax are: paraffin, natural waxes/Canada balsam, beeswax, Carnauba wax/. Natural resins, e.g. shellac can also be used.

According to the invention the preferred inhibitors may be the hydroquinone, hydroquinone-derivatives, ascorbic acid, phenol and phenol derivatives. These compounds, besides inhibiting the non-desired polymerization of the alkyl methacrylate, also possess a certain bacteriostatic effect.

The energy transmission is accomplished by heat treatment, UV or laser irradiation, preferably under stirring.

If the energy transmission is carried out by heat treatment, the fungicidal compound(s) the alkyl methacrylate and inhibitor are mixed and warmed up to 100 to 130°C. The treatment is carried out preferably for 0.5 to 3 hours.

According to the another embodiment of the invention, the mixture of alkyl methacrylate, the fungicidal compound(s) and inhibitor is treated by UV irradiation for 5 to 60 minutes at 10 to 20°C, preferably under cooling. For this purpose, a quartz sound provided with a cooler and a quartz bulb working in the range of 300 to 500 nm (3000 to 5000Å) is placed into the reactor. In this case the stirring is accomplished with an inert gas, preferably nitrogen or carbon dioxide. By working without cooling, the reaction temperature will raise to about 80°C.

According to another embodiment of the invention, the mixture of alkyl methacrylate, the fungicidal compound(s) inhibitor are treated by laser irradiation. For example in photochemical reactor, under strong water cooling and nitrogen stirring and using argon-ion 488 nm line at a performance of 1 W the reaction takes place in 2 to 3 hours. By using an apparatus of 4 W performance (6 laser lines enter the reaction area together) the reaction time decreases to 30 to 40 minutes. This reaction mode eliminates the need of heat energy and the reaction can safely be controlled.

According to the invention the preferred ratio of the reactants is 0.9 to 10 parts by weight of liquid alkyl methacrylate monomer and 0.8 to 10 parts by weight of inhibitor to 1 part by weight of fungicidal compound(s).

The active material thus obtained is mixed with resins of different type to obtain the wound treatment substance according to the invention.

The resin is mixed to the active material in an amount of 50 to 100% by weight based on the total amount of the other materials, if desired, under heating. According to another embodiment of the invention the resin is dissolved in a solvent and added to the active material obtained by the reaction of inhibitor, alkyl methacrylate and fungicidal compound(s) before cooling.

Suitable solvents for this purpose, depending on the type of the resin are: gasoline, xylene, toluene, petroleum, paraffin oils, butyl acetate, higher alcohols, etc.

The concentration of the said resin solutions is preferably 40 to 70% by weight. The preferred wound treatment resin contains 50 to 80% by weight of resin.

The composition containing the substance may be formulated, e.g. in the form of paste, viscous solution or aqueous dilutions (such as spray).

As additive, pigments or pigment-containing materials may also be added to the composition, if labelling is needed. Such additives are, e.g. the indanthrene derivatives, which are then degraded when exposed to UV light.

In case of using the composition in the form of paste or viscous solution, preferably a pigment or pigment-containing agent is added to the system, especially for protecting against a UV-light. Such additives are, e.g. the metal pigments, like aluminium, bronze, copper alloys, manganese, etc. Other suitable pigments are the oxides, such as titanium dioxide, aluminium oxide, barium oxide or finely divided silica, as well as the micae such as aluminium phosphatide, calcium phosphatide, etc.

The invention also relates to a composition for the treatment of bark and hadrome which contains, as active ingredient, a substance prepared according to the process as defined above.

The wood treatment compositions according to the invention may also contain further well-known auxiliaries.

The composition is applied on the surface to be treated in a layer of 10 µm to 2 mm thickness.

The composition according to the invention provides protection against secondary fungal infections for 2 to 3 years, thus preventing, e.g. the secondary settlement of wood-rotting fungi. It provides not only protection but also curative effect against many fungus strains attacking the phloem from the inside.

The biological activity of the composition according to the invention was tested against various plant diseases caused by fungi, among others:

branch carcinoma caused by Cytospora cincta and tree destruction on peach, apricot, cherry and sour-cherry,

carcinoma caused by Phacidiella discolor on apple and pear,

"black carcinoma" caused by Sphaeropsis malorum on apple and pear,

carcinoma caused by Nectrina galligena on apple and pear.

As the infectious fungi are wound-parasitic, the treatment of wounds and the skilled use of the materials for treatment plays an important role in the protection.

In vivo laboratory tests of the compositions were carried out on potato-dextrose medium in Petri plates. The medium was inoculated on 3 spots and incubated for 3 to 5 days, depending on the growth velocity. After incubation, a hole was made at the centre of each plate and 0.1 ml of test material was dropped therein. The plates were subsequently incubated until the untreated control plates become completely overgrown. Evaluation of the fungicidal effect was accomplished by measuring the inhibition zones. Table I shows the effect of the product obtained according to Example 1 (MBH) on different fungi. The composition labelled MBH showed a total inhibition against each fungus.

As comparison, the biological effects of the single components of the composition Benomyl-methyl methacrylate-hydroquinone-alkyd resin have also been determined. It has been found that none of the Benomyl-hydroquinone system, the methyl methacrylate-hydroquinone system and the Benomyl-methyl

3

methacrylate system showed an effect comparable with that of the compositions according to the invention.

When omitting the hydroquinone, the Benomyl should have been kept suspended in the fluid monomer by continuous stirring in order to avoid sedimentation and discoloration. The thermal treatment of the Benomyl-hydroquinone system could only be performed in the presence of a solvent. For example, thermal treatment of Benomyl and hydroquinone in the presence of toluene at 110°C for 48 hours yielded a mixture, the biological activity of which did not exceed that of the Benomyl, i.e. only a surface activity was obtained.

Best Mode of Carrying out the Invention

Biological examples

The biological effect of the compositions according to the invention was tested against the following fungi:

| Fungus | from |
|---|---|
| Cytospora cincta | peach |
| Sphaeropsis malorum | apple |
| Phomopsis mali | apple |
| Phacidiella discolor | pear |
| Chondrostereum purpureum | apple |
| Eutypa armeniacae | apricot |
| Pezicula malicorticis | apple. |

For comparison, the biological effect of the commercially available Santar SM was also tested.

TABLE I

Example I

| Fungus | Untreated control | Product of Example 1 | Santar SM | Product of Example 7 |
|---|---|---|---|---|
| Cytospora cincta | φ | TI | 20% | TI |
| Phomopsis mali | φ | TI | 5% | TI |
| Sphaeropsis malorum | φ | TI | 20% | TI |
| Stereum purpureum | φ | TI | 20% | φ |
| Phacidiella discolor | φ | TI | TI | TI |

TI = total inhibition;

% = some inhibition occurred around the composition; this is expressed in the % of area. Over the inhibition zone the vitality of fungus remained unchanged;

φ = no inhibition, the plate is overgrown.

TABLE II

| Example II Fungus | Untreated control | Product of Example 3 |
|---|---|---|
| Cryptosporiopsis corticola | φ | TI |
| Cryptosporiopsis malicorticis | φ | TI |
| Diplodia sp. | φ | SI |
| Eutypa armeniacae | φ | TI |
| Coryneum microstictum | φ | TI |
| Libertella blepharis | φ | TI |
| Stereum purpureum | φ | SI |

SI = strong inhibition

Example III

Open-air tests were carried out to determine the biological effect of the compositions according to the invention.

Cancerous wounds of peach trees infected with Cytospora cincta were cleaned up as deep as the healthy tissues and the compositions were applied as viscous fluid by brush on the surface. As comparative material, commercially available Santar SM was used.

The following results were obtained:

a) Product of Example 1

In the eighth month after treatment tissue fragments obtained from the infected and treated tissues were passed on sterile PDA medium. It was found that no mycelium remained in the xyleme which shows the curative effect. No inhibition of callus formation was detected. The product possessed an excellent fungicidal effect.

b) Product of Example 6

According to the test under a) as above, the composition showed sufficient fungicidal activity. The re-isolations from the tissues under the treated area were negative, i.e. no infection could be detected 8 months after treatment: a proof of the curative effect. The composition forms an excellent surface: the surface formed by the composition has not changed 6 months after treatment; no slits were formed. By pressure of the callus formed the layer broke: the growth of callus was not inhibited.

c) Santar SM

The formation of durable surface was not observed. Due to drying of the cleaned area (xylem) deep slits were formed providing a possibility for penetration of fungi. In the eighth month after treatment the Cytospora could be re-isolated in vital form.

d) Grafting wax

The application was completed and the wax frequently separated from the treated area. No inhibition of fungi was observed; moreover, directly under the layer formed by the wax great quantities of Cytospora cincta mycelium were deposited.

Example IV

In open-air tests, branches of peach were infected with Cytospora cincta on 100 spots. Two weeks after infection the aqueous solutions of the composition according to the invention were applied on 30 of the spots by spraying the solution twice or three times so that a uniform layer was formed. One week after the treatment, attempt was made to re-isolate the pathogenic fungus. The results are shown herebelow:

Re-isolated fungi:

| treated | φ |
|---|---|
| control | 100% |

The re-isolation was carried out with each 10 samples.

Example V

In open-air tests the penetration of the compositions according to the invention were examined in vivo. The test was carried out on removed branches of 4 to 5 years old peach trees. On the freshly sawn surface the following materials were applied:

a) the active material prepared from Benomyl, methyl methacrylate and hydroquinone according to Example 1,

b) the end product of Example 1,

c) Santar SM.

After 24 hours the treated surface was removed in a depth of 5 mm and additional slices of 5 mm were cut from the branch. The disks, after surface flaming, were placed on PDA medium inoculated with the conidia of Penicillium cyclopium and incubated at 26°C for 48 hours. It was established (see Table III) that

in the case of Santar SM no inhibition (inhibition zone) was obtained,

the resin product (b) showed an inhibition zone to a deepness of 15 mm,

the material (a) showed an inhibition zone to a deepness of 30 mm.

By using the above method it was demonstrated that the fungicidal material had penetrated into the woody parts.

TABLE III

| Penetration mm | 5 | 10 | 15 | 20 | 25 | 30 |
|---|---|---|---|---|---|---|
| Resin product (formulated product of Example 1) | + | + | + | − | − | − |
| Active material (Example 1) | + | + | + | + | + | + |
| Santar SM | − | − | − | − | − | − |

The process according to the invention is illustrated by the following examples:

Example 1

In a reactor provided with stirrer 55 kg of methyl methacrylate and 20 kg of hydroquinone are mixed and 25 kg of Benomyl was added. The mixture was heated to 110°C and stirred for one hour. The two-phase reaction mixture was cooled, thus obtaining 100 kg of product. This active material was used without additives as shown in Tables I and III.

The resin was prepared as follows;

100 kg of sunflower fatty acid, 40 kg of pentaerythrite, 55 kg of phtalic anhydride and 8 kg of xylene were mixed and refluxed at 220°C for 4 hours (acidity max. 25 mg KOH/g). The water produced was continuously removed by azeotropic distillation. Then the mixture was cooled to 150°C and 180 parts by weight of white spirit was added to form a solution. The viscosity of product at 20°C (beaker No. 4) was 180 to 200 sec. 383 kg of gasoline-free solution was obtained.

To the above solution the following additives were added:

100 kg of aluminium pigment (so-called "silver pigment"),

50 kg of Aerosil® —380 (finely divided silica),

1 kg of cobalt naphtenate,

200 kg of silicon lac,

70 kg of titanium dioxide.

The addition was performed during vigorous stirring.

The above mixture (a total of 421 kg) was mixed with

320 kg of the aforesaid active material and

310 kg of the above resin solution.

The 1051 kg of fluid product thus obtained can directly be used for the treatment of trees either by brushing or by spraying.

## Example 2

The process of Example 1 was repeated with the difference that for preparing the active material the following materials were used:

| Benomyl | 130 kg |
|---|---|
| methyl methacrylate monomer | 150 kg |
| hydroquinone | 40 kg |

To the product thus obtained the additives according to Example 1 were added. The product was suitable for wound treatment.

## Example 3

Following the process of Example 1 the following materials were used:

|  | (% by weight) |
|---|---|
| Triadimephon | 6 |
| methyl methacrylate monomer | 20 |
| hydroquinone | 4 |
| resin solution (with white spirit) | 28 |
| aluminium pigment | 10 |
| Aerosil® —380 | 5 |
| cobalt naphthenate | 0.1 |
| silicon lac | 19.86 |
| titanium dioxide | 7 |

The product is suitable for wound-treatment of trees: against fungal (e.g. powdery mildew) infections. The effect is curative and preventive.

## Example 4

In a reactor provided with a stirrer 3 parts by weight of methyl methacrylate and 2 parts of hydroquinone were placed and after stirring 3 parts of Benomyl was added. The stirring was accomplished with nitrogen gas. A double walled quartz sound provided with a 340 to 390 nm (3400 to 3900Å) quartz UV bulb was placed into the reactor. The bulb was switched on and the solution was stirred with nitrogen gas for $\frac{1}{2}$ hour. To the two-phase product the resin and additives of Example 1 were added.

The use of the product is similar to that of the composition of Example 1.

## Example 5

In a reactor provided with a reflux cooler 1 part of Benomyl, 2 parts of methyl methacrylate and 1 part of hydroquinone were added. The mixture was vigorously stirred with nitrogen gas. The reactor was provided with a quartz sound functioning with a 340 to 390 nm (3400 to 3900Å) quartz UV bulb. The irradiation raised the temperature to 80°C. The mixture was refluxed for 10 minutes then stopped, the mixture was cooled and the resin of Example 1 was added.

The product can be used for treating the wounds of trees with curative and preventive effect.

## Example 6

As fungicidal compound 1-[2-(2,4-dichloro-phenyl)-4-propyl-1,3-dioxolan-2-il-methyl]-1H-1,2,4-triazine was used. 6 kg of the above compound, 8 kg of methyl methacrylate and 6 kg of hydroquinone were mixed and heated in a reactor at 110°C for one hour while stirring.

A separate reactor 40 kg of polyisocyanate prepolymer (Desmodur® E—21) was dissolved in 11 kg of butyl acetate and mixed with 10 kg of aluminium pigment, 6 kg of titanium dioxide and 3 kg of finely dispersed silica (Aerosil® —380) under anhydrous conditions and in nitrogen atmosphere.

The mixture was added to the above active material and stirred until a homogenous mixture was obtained (about 30 minutes).

The solution thus obtained was filled under carbon dioxide pressure.

7

The mixture is suitable for preventive and curative treatment against powdery mildew, Urcinula necator and Guignardia bidwelli and forms durable and strong film. The protective layer remained on the tree for more than one year, without inhibiting the growth thereof.

## Example 7

5 parts of methyl methacrylate, 0.5 parts of hydroquinone and 2 parts of Benomyl were mixed. The mixture was stirred with hydrogen gas, then cooled and exposed to 4 MHz laser ray for 30 minutes. The reaction was interrupted, the mixture cooled and the auxiliaries according to Example 1 were added to the product.

The composition thus obtained was applied on the surface of wounds: the medium assay of tissue samples did not show fungal growth.

## Example 8

In a reactor provided with stirrer 20 parts of methyl methacrylate and 2 parts of hydroquinone were mixed as fungicidal compound 3 parts of beta-(4-chlorophenoxy)-alfa-1,1-dimethyl-1H-1,2,4-triazin-1-ethanol was added. The mixture was stirred at 110°C for one hour, cooled and mixed with the resin and auxiliaries of Example 6.

The product can be applied as spray or by brush on cleaned tree wounds. An excellent durable wound-treatment composition was obtained.

## Example 9

15 kg of Benomyl, 65 kg of butyl methacrylate monomer and 20 kg of hydroquinone were heated at 120°C for one hour. The mixture was cooled to 30°C and 26 parts of solution consisting of 40% of alkyd resin and 60% of gasoline mixed with 0.5 kg of Aerosil® —380, 0.1 kg of cobalt naphthenate, 20 kg of methyl base silicon lac and 7.0 kg of titanium dioxide were added and homogenized.

## Example 10

6 kg of 1-[2-(2,4-dichlorophenol)-4-propyl-1,3-dioxolan-2-yl-methyl]-1H-1,2,4-triazine, 8 kg of methyl methycrylate monomer and 6 kg of hydroquinone were stirred at 110°C for 50 minutes and cooled to room temperature.

In a separate vessel 10 kg of beeswax, 10 kg of paraffin, 10 kg of aluminium pigment (covered by paraffin) and 0.5 kg of finely divided silica (Aerosil® —320) were dissolved under slight warming and stirring. The mixture thus obtained was added to the above active material, homogenized and cooled, thus obtaining a paste-like product.

The product can be used as grafting wax when grafting fruit trees (apple, apricot, cherry) and at budding of vine and rose for protecting the place of grafting and budding. Eliminates the Entypa armeciacae and Cytospora cincta infections carried by the grafting material. No carcinoma could be observed on the graftings in one year.

## Example 11

As fungicidal compounds the mixture of 3 parts of Benomyl and 3 parts of beta-(4-chlorophenoxy)-alfa-(1,1-dimethyl-ethyl)-1H-1,2,4-triazin-1-ethanol was used and brought into contact with the methyl methacrylate and hydroquinone as in Example 1 followed by mixing with alkyd resin and additives.

The product thus obtained has excellent antifungal wound treating material which can be used against Eutypa armeniacae, Cytospora cincta and Stereum purpureum with good preventive and curative effect, e.g. on apricot trees.

## Example 12

3 kg of 2,3-dicarbo-1,4-dithio-anthraquinone, 11 kg of methyl methacrylate monomer and 6 kg of hydroquinone were heated at 110°C for 1¼ hours. The product was formulated with resin and auxiliaries as in Example 1.

The product has preventative and curative effects against fungal infections on peach trees.

## Example 13

6 kg of Triphorin, 8 kg of methyl methacrylate and 6 kg of hydroquinone were heated at 110°C for one hour. The mixture was cooled and a gasoline solution of polyurethane resin was added thereto. After the addition of auxiliaries the product was used for wound treatment against fungal infections on peach with curative and preventive effect.

## Example 14

20 kg of methyl methacrylate monomer, 1 kg of hydroquinone, 5 kg of "copper amine" (prepared from 1 mole of copper sulfate and 1 mole of triethyl amine) and 1 kg of surface treated sulfur were mixed and heated at 105°C for one hour, cooled and 28 kg of a solution prepared from 60 parts of gasoline and 40 parts of alkyd resin was added thereto. After the addition of auxiliaries as in Example 1, the product can be used on trees as wound treating material.

## Example 15

1 kg of Topsin methyl, 3 kg of methyl methacrylate, 1 kg of 1,2-(2,4-dichlorophenyl)-4-propyl-1,3-dioxolan-2-yl-methyl-1H-1,2,4-triazin and 2 kg of hydroquinone were heated at 110°C for 1 hour. After cooling, 7 kg of resin solution prepared from 65 parts of gasoline and 35 parts of alkyd resin was added. The auxiliaries according to Example 1 were added and stirred until homogeneous mixture was obtained. The product was filled in aerosol containers and 50 g of product Freon® 11 and 50 g of Freon® 12 were added to 100 g of the above mixture under pressure. The container was sealed and provided with spraying valve. The composition was sprayed on cleaned surface of wounds. The isolated sample taken after 3 months did not show fungal infection in 2 to 3 days' incubation period.

**Claims**

1. Process for preparing a substance for treating and/or preventing fungal disease in the bark and woody tissues of arborescent vegetation, characterized in that one or more fungicidal compound(s) is (are) contacted with an alkyl methacrylate, preferably methyl methacrylate and a cross-linking inhibiting agent [inhibitor] by energy transmission accomplished by heating, UV or laser irradiation, and the active material thus obtained is mixed with a resin and/or wax in the presence or absence of an organic solvent.

2. The process according to claim 1, characterized in that as inhibitor hydroquinone is used.

3. The process according to any of claims 1 or 2, characterized in that the energy transmission is accomplished under stirring.

4. The process according to any of claims 1 or 2, characterized in that the active compound(s), the methacrylate and inhibitor are mixed and heated at 100 to 130°C, preferably for 0.5 to 3 hours.

5. The process according to any of claims 1 to 3, characterized in that the mixture of active compound, methacrylate and inhibitor is irradiated with UV-light for 5 to 40 minutes at 10 to 80°C.

6. The process according to claim 5, characterized in that the mixture is stirred by nitrogen or hydrogen stream.

7. The process according to any of claims 1 to 4, characterized in that the mixture of active compound, methacrylate and inhibitor is exposed to laser-ray.

8. The process according to any of claims 1 to 7, characterized in that the fungicidal compounds are selected from the group consisting of Methoxycarbamoyl benzimidazole, Benomyl, Captafol, Zineb, Thiophanate-methyl, Procymidon, 2-n-octyl-4-isothiazolin-3-on, Cursate, copper oxychloride, Fenarimol, Captan, Metidathion, 8-oxyquinoline sulfate, Triphorin, Iprodion, Vinchlozolin and the mixtures thereof.

9. A composition for treating and/or preventing fungal diseases in the bark and woody tissues of arborescent vegetation containing an agent obtained according to the process of claim 1.

10. The composition according to claim 9, characterized in that the fungicidal active material is selected from the group consisting of Methoxycarbamoyl benzimidazole, Benomyl, Captafol, Zineb, Thiophanatemethyl, Procymidon, 2-n-octyl-4-isothiazolin-3-on, Cursate, copper oxychloride, Fenarimol, Captan, Metidathion, 8-oxyquinoline sulfate, Triphorin, Iprodion, Vinchlozolin and the mixtures thereof.

11. The composition according to claim 9, characterized in that the resin is selected from the group consisting of synthetic resins such as alkyd, epoxy, styrene, silicon and/or polyurethane resins and tar.

12. Process for treating arborescent vegetation, characterized in that the composition according to claims 9 to 11 is evenly applied on the bark of the plant, especially on the wounded surfaces in a thickness of 0.1 to 2 mm.

**Patentansprüche**

1. Verfahren zur Herstellung einer Substanz zur Behandlung und/oder Vorbeugung von Pilzkrankheiten in der Borke und den Holzgeweben baumartiger Pflanzen, dadurch gekennzeichnet, daß eine oder mehrere fungizide Verbindung(en) mit einem Alkylmethacrylat, vorzugsweise Methylmethacrylat, und einem vernetzenden inhibierenden Mittel (Inhibitor) unter Energieübertragung in Kontakt gebracht wird/werden, die durch Erwärmen, Bestrahlen mit UV-licht oder Laserbestrahlung bewirkt wird, und das so erhaltene aktive Material mit einem Harz und/oder Wachs in Gegenwart oder Abwesenheit eines organischen Lösungsmittels vermischt wird.

2. Verfahren nach Anspruch 1, dadurch gekennzeichnet, daß als Inhibitor Hydrochinon verwendet wird.

3. Verfahren nach einem der Ansprüche 1 oder 2, dadurch gekennzeichnet, daß die Energieübertragung unter Rühren bewirkt wird.

4. Verfahren nach einem der Ansprüche 1 oder 2, dadurch gekennzeichnet, daß die aktive(n) Verbindung(en), das Methacrylat und der Inhibitor vermischt und auf 100 bis 130°C erwärmt werden, vorzugsweise für eine Zeitdauer von 0,5 bis 3 Stunden.

5. Verfahren nach einem der Ansprüche 1 oder 3, dadurch gekennzeichnet, daß die Mischung aus aktiver Verbindung, Methacrylat und Inhibitor mit UV-Licht 5 bis 40 Minuten lang bei 10 bis 80°C bestrahlt wird.

6. Verfahren nach Anspruch 5, dadurch gekennzeichnet, daß die Mischung mit einem Stickstoff- oder Wasserstoffstrom gerührt wird.

7. Verfahren nach einem der Ansprüche 1 bis 4, dadurch gekennzeichnet, daß die Mischung aus aktiver Verbindung, Methacrylat und Inhibitor Laserstrahlung ausgesetzt wird.

8. Verfahren nach einem der Ansprüche 1 bis 7, dadurch gekennzeichnet, daß die fungiziden Verbindungen ausgewählt sind aus der Gruppe Methoxycarbamoylbenzimidazol, Benomyl, Captafol, Zineb, Thiophanate-methyl, Procymidon, 2-n-Octyl-4-isothiazolin-3-on, Cursate, Kupferoxychlorid, Fenarimol, Captan, Metidathion, 8-Oxychinolinsulfat, Triphorin, Iprodion, Vinchlozolin und die Mischungen davon.

9. Zusammensetzung zur Behandlung und/oder Vorbeugung von Pilzkrankheiten in der Borke und den Holzgeweben von baumartigen Pflanzen, enthaltend ein Mittel, das nach dem Verfahren gemäß Patentanspruch 1 erhalten wurde.

10. Zusammensetzung nach Anspruch 9, dadurch gekennzeichnet, daß das fungizide aktive Material ausgewählt ist aus der Gruppe Methoxycarbamoylbenzimidazol, Benomyl, Captafol, Zineb, Thiophanate-methyl, Procymidon, 2-n-Octyl-4-isothiazolin-3-on, Cursate, Kupferoxychlorid, Fenarimol, Captan, Metidathion, 8-Oxychinolinsulfat, Triphorin, Iprodion, Vinchlozolin und die Mischungen davon.

11. Zusammensetzung nach Anspruch 11, dadurch gekennzeichnet, daß das Harz ausgewählt ist aus der Gruppe synthetischer Harze wie Alkydharze, Epoxyharze, Styrolharze, Siliconharze und/oder Polyurethanharze und Teer.

12. Verfahren zur Behandlung baumartiger Pflanzen, dadurch gekennzeichnet, daß die Zusammensetzung gemäß Patentansprüchen 9 bis 11 gleichmäßig auf die Borke der Pflanze, insbesondere auf die verwundeten Flächen, in einer Dicke von 0,1 bis 2 mm aufgebracht wird.

**Revendications**

1. Procédé pour la préparation d'une substance pour le traitement et/ou la prévention de maladies fongiques dans l'écorce et les tissus ligneux des végétaux arborescents, caractérisé en ce que l'on met un ou plusieurs composés fongicides en contact avec un méthacrylate d'alkyle, de préférence le méthacrylate de méthyle, et un agent inhibitant la réticulation (inhibiteur) par transmission d'énergie effectuée par chauffage, irradiation par les rayons ultraviolets ou par laser, et on mélange la matière active ainsi obtenue avec une résine et/ou une cire en présence ou en l'absence d'un solvant organique.

2. Procédé selon la revendication 1, caractérisé en ce que, comme inhibiteur, on utilise l'hydroquinone.

3. Procédé selon l'une quelconque des revendications 1 ou 2, caractérisé en ce que la transmission d'énergie est effectuée sous agitation.

4. Procédé selon l'une quelconque des revendications 1 ou 2, caractérisé en ce que l'on mélange le ou les composés actifs, le méthacrylate et l'inhibiteur et on chauffe entre 100 et 130°C, de préférence pendant 0,5 à 3 heures.

5. Procédé selon l'une quelconque des revendications 1 à 3, caractérisé en ce que l'on irradie le mélange du composé actif, du méthacrylate et de l'inhibiteur avec de la lumière ultraviolette pendant 5 à 40 minutes entre 10 et 80°C.

6. Procédé selon la revendication 5, caractérisé en ce que l'on agite le mélange sous courant d'azote ou d'hydrogène.

7. Procédé selon l'une quelconque des revendications 1 à 4, caractérisé en ce que l'on expose le composé actif, le méthacrylate et l'inhibiteur à un rayonnement laser.

8. Procédé selon l'une quelconque des revendications 1 à 7, caractérisé en ce que les composés fongicides sont choisis dans le groupe constitué par le méthoxycarbamoylbenzimidazole, le Bénomyl, le Captafol, le Zineb, le Thiophanate-methyl, le Procymidon, la 2-n-octyl-4-isothiazoline-3-one, le Cursate, l'oxychlorure de cuivre, le Fenarimol, le Captan, le Metidathion, le sulfate de 8-oxyquinoléine, le Triphorin, l'Iprodion, le Vinchlozolin et leurs mélanges.

9. Composition pour le traitement et/ou la prévention des maladies fongiques de l'écorce et des tissus ligneux des végétaux arborescents contenant un agent obtenu selon le procédé de la revendication 1.

10. Composition selon la revendication 9, caractérisé en ce que la matière fongicide active est choisie dans le groupe constitué par le méthoxycarbamoylbenzimidazole, le Bénomyl, le Captafol, le Zineb, le Thiophanate-méthyl, le Procymidon, la 2-n-octyl-4-isothiazoline-3-one, le Cursate, l'oxychlorure de cuivre, le Fénarimol, le Captan, le Métidathion, le sulfate de 8-oxyquinoléine, le Triphorin, l'Iprodion, le Vinchlozolin et leurs mélanges.

11. Composition selon la revendication 9, caractérisé en ce que la résine est choisie dans le groupe constitué par les résines synthétiques, telles que les résines alkydes, les résines époxy, les résines de styrène, les résines au silicium et/ou les résines de polyuréthane et les goudrons.

12. Procédé pour le traitement des végétaux arborescents, caractérisé en ce qu'on applique régulièrement sur l'écorce de la plante, en particulier sur les surfaces blessées, une composition selon les revendications 9 à 10 en une épaisseur de 0,1 à 2 mm.